# EUROPEAN PATENT APPLICATION

(11) **EP 3 815 820 A1**
(43) Date of publication of application: **05.05.2021**
(21) Application number: 20200243.2
(22) Date of filing: 06.10.2020
(51) Int. Cl.: B22F 10/31, B22F 10/36, B22F 10/85, B22F 12/90, B29C 64/386, B33Y 40/00, B33Y 50/00, B23K 26/04

(54) **METHOD FOR CALIBRATION OF AT LEAST ONE IRRADIATION DEVICE OF AN APPARATUS FOR ADDITIVELY MANUFACTURING THREE-DIMENSIONAL OBJECTS**

(30) Priority: 31.10.2019 US 201916669950
(71) Applicant: Concept Laser GmbH, 96215 Lichtenfels (DE)
(72) Inventor: Winiarski, Daniel, 96215 Lichtenfeles (DE)
(74) Representative: Hafner & Kohl PartmbB

(57) **Abstract**

Methods of calibrating an irradiation device of an apparatus for additively manufacturing three-dimensional objects include arranging at least one calibration body in a beam guiding region in which an energy beam can be guided via an irradiation device, with the calibration body being at least partially permeable for the energy beam, guiding the energy beam to at least one position on the calibration body and/or in the volume of the calibration body, generating at least one calibration structure in the at least one position, determining at least one calibration parameter of the at least one calibration structure, determining a calibration status of the irradiation device dependent on the at least one calibration parameter, and calibrating the irradiation device based on the calibration status.

## Description

### BRIEF DESCRIPTION

Aspects and advantages will be set forth in part in the following description, or may be obvious from the description, or may be learned through practicing the presently disclosed subject matter.

In one aspect, the present disclosure embraces methods of calibrating an irradiation device of an apparatus for additively manufacturing three-dimensional objects. The apparatus may be configured to perform successive layerwise selective irradiation and consolidation of layers of a build material which can be consolidated by means of an energy beam guided by the irradiation device. Exemplary methods may include arranging at least one calibration body in a beam guiding region in which an energy beam can be guided via an irradiation device, with the calibration body being at least partially permeable for the energy beam, guiding the energy beam to at least one position on the calibration body and/or in the volume of the calibration body, generating at least one calibration structure in the at least one position, determining at least one calibration parameter of the at least one calibration structure, determining a calibration status of the irradiation device dependent on the at least one calibration parameter, and calibrating the irradiation device based on the calibration status.

In another aspect, the present disclosure embraces determination devices for calibrating an irradiation device of an apparatus for additively manufacturing three-dimensional objects by means of successive layerwise selective irradiation and consolidation of layers of a build material which can be consolidated by means of an energy beam guided by the irradiation device, wherein the determination device is adapted to determine at least one calibration parameter of at least one calibration structure, determine a calibration status of the irradiation device dependent on the at least one calibration parameter, and calibrate the irradiation device based on the calibration status. When the determination device is used, the at least one calibration body may be arranged in a beam guiding region in which the energy beam can be guided via the irradiation device, and the calibration body may be at least partially permeable for the energy beam. The energy beam may be used to generate the at least one calibration structure in the at least one position, and the energy beam may be guided to at least one position on the calibration body and/or in the volume of the calibration body.

In yet another aspect, the present disclosure embraces c computer-readable medium comprising computer-readable instructions, which when executed by a processor associated with a determination device for calibrating an irradiation device of an apparatus for additively manufacturing three-dimensional objects, cause the determination device to determine at least one calibration parameter of at least one calibration structure, determine a calibration status of the irradiation device dependent on the at least one calibration parameter, and calibrate the irradiation device based on the calibration status.

These and other features, aspects and advantages will become better understood with reference to the following description and appended claims. The accompanying drawings, which are incorporated in and constitute a part of this specification, illustrate exemplary embodiments and, together with the description, serve to explain certain principles of the presently disclosed subject matter.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIG. 1 shows an apparatus for additively manufacturing three-dimensional obj ects;
FIG. 2 shows a calibration body for calibrating an irradiation device of an apparatus for additively manufacturing three-dimensional objects;
FIG. 3A shows a side view of the calibration body of FIG. 2 according to a first exemplary embodiment along a first determination direction;
FIG. 3B shows a top view of the calibration body of FIG. 2 according to the first exemplary embodiment along a second determination direction;
FIG. 4A shows a side view of the calibration body of FIG. 2 according to a second exemplary embodiment along the first determination direction;
FIG. 4B shows a top view of the calibration body of FIG. 2 according to the second exemplary embodiment along the second determination direction;
FIG. 5A shows a side view of the calibration body of FIG. 2 according to a third exemplary embodiment along the first determination direction;
FIG. 5B shows a top view of the calibration body of FIG. 2 according to the third exemplary embodiment along the second determination direction;
FIG. 6A shows a side view of a calibration body according to a fourth exemplary embodiment in a first process step;
FIG. 6B shows a side view of the calibration body of FIG. 6A in a second process step;
FIG. 6C shows a side view of the calibration body of FIG. 6A in a third process step;
FIG. 7A shows a side view of a calibration body according to a fifth exemplary embodiment in a first process step;
FIG. 7B shows a side view of the calibration body of FIG. 7A in a second process step;
FIG. 7C shows a side view of the calibration body of FIG. 7A in a third process step; and
FIG. 8 shows a calibration body according to a sixth embodiment.

Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

It is also understood that terms such as "top", "bottom", "outward", "inward", and the like are words of convenience and are not to be construed as limiting terms. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Here and throughout the specification and claims, range limitations are combined and interchanged, and such ranges are identified and include all the subranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems.

Exemplary embodiments of the present disclosure will now be described in further detail.

The invention relates to a method for calibration of at least one irradiation device of an apparatus for additively manufacturing three-dimensional objects by means of successive layerwise selective irradiation and consolidation of layers of a build material which can be consolidated by means of an energy beam guided by the irradiation device.

Irradiation devices for apparatuses for additively manufacturing three-dimensional objects and methods for calibrating the same are generally known from prior art. Typically, an irradiation device is used in an additive manufacturing process to guide an energy beam across a build plane in which build material is arranged, wherein due to the selective irradiation of the build material, the build material is consolidated and the object can be layerwise built.

Further, it is known from prior art that the proper adjustment of certain parameters of the irradiation device is crucial for object quality and process quality, such as the positioning accuracy and the adjustment of the focal position of the energy beam, since deviations from a nominal parameters can lead to defects in the object that is generated during the additive manufacturing process, e.g. due to a deviation from a nominal energy deposition in the build material, displacements of certain layers or certain parts of layers and the like. In order to calibrate an irradiation device usually a calibration body, e.g. a metal sheet, is arranged in an apparatus for additively manufacturing three-dimensional objects, wherein a certain calibration pattern, usually a line pattern, is irradiated on the surface of the calibration body and the positions of the lines and the line width is compared to nominal positions/widths. This process has to be repeated for certain positions, in particular for certain focus positions of the energy beam in order to derive whether the current focus position is properly adjusted or whether a change in focus position can further increase the accuracy in the additive manufacturing process. Thus, usually the part in which the calibration pattern is irradiated has to be taken out of the apparatus and measured, e.g. analyzed via eyesight, a microscope or the like. Thus, the calibration process is cumbersome and time-consuming and requires irradiation steps in different focal positions with different calibration bodies or calibration patterns in different positions in the build plane.

It is an object of the present invention to provide an improved method for calibration of an irradiation device for an apparatus for additively manufacturing three-dimensional objects.

The object is inventively achieved by a method according to claim 1. Advantageous embodiments of the invention are subject to the dependent claims.

The method described herein is a method for calibration of at least one irradiation device of an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam. A respective apparatus can be an apparatus in which an application of build material and a consolidation of build material is performed separately, such as a selective laser sintering apparatus or a selective laser melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a method for calibration of at least one irradiation device of an apparatus for additively manufacturing three-dimensional objects. The inventive method comprises the steps: arranging at least one calibration body in a beam guiding region in which the energy beam can be guided via the irradiation device, wherein the calibration body is at least partially permeable for the energy beam; guiding the energy beam, in particular a spot of the energy beam, to at least one position on the calibration body and/or in the volume of the calibration body; generating at least one calibration structure, in particular a detectable status change of the calibration material, in the at least one position; determining at least one calibration parameter of the at least one calibration structure; determining a calibration status of the irradiation device dependent on the at least one calibration parameter; calibrating the irradiation device based on the calibration status.

Thus, the invention is based on the idea that a calibration body can be arranged in a beam guiding region of the irradiation device, which calibration body is at least partially permeable for the energy beam. Therefore, and unlike to calibration bodies used in conventional processes for calibration of irradiation devices, the energy beam can propagate through the calibration body. The calibration body may therefore, also be deemed partially "translucent", "transparent", "light permeable", as the energy beam, e.g. a laser beam, can enter the volume of the calibration body and can be guided through the calibration body, if necessary. In general, the energy beam can be guided at least partially through the calibration body. Thus, by guiding the energy beam to at least one position on the calibration body and/or in the volume of the calibration body, different positions in the beam guiding region can be addressed, in particular the spot of the energy beam can be moved to different positions on the calibration body or in the volume of the calibration body.

Hence, not only the outer surface of the calibration body can be used to generate calibration patterns and therefore, perform the calibration process, but it is also possible to use the entire volume of the calibration body, e.g. any arbitrary point inside the volume or on the surface of the calibration body can be used to perform the calibration process by generating calibration structures in positions in the volume of the calibration body.

By guiding the energy beam, in particular a spot of the energy beam, to the position on or in the calibration body, a calibration structure can be generated, in particular a detectable status change of the calibration material, i.e. the material of the calibration body, in the at least one position. The energy beam, in particular the spot of the energy beam that is guided to the position can generate at least one calibration structure, for example a status change of the material of the calibration body in that position that can be detected, e.g. via a suitable detection device, such as a camera. The calibration structure, e.g. the status change of the material of the calibration body, can be determined as at least one calibration parameter of the at least one calibration structure. Hence, after the at least one calibration structure has been generated via the energy beam in the calibration body and/or on the calibration body, the at least one calibration parameter can be determined, e.g. with the detection device, as described before.

Dependent on the at least one calibration parameter a calibration status of the irradiation device can be determined, e.g. based on the position and/or the size and/or any other suitable parameter comprised in the calibration parameter or to which the at least one calibration parameter relates. Subsequently, the irradiation device can be calibrated based on the calibration status. In particular, it is possible to decide whether or not a calibration of the irradiation device is necessary based on the calibration status. For example, if the calibration status indicates that the at least one calibration structure is properly generated via the energy beam, a calibration of the irradiation device might not be necessary. If, on the other hand, a deviation in the calibration parameter from a nominal parameter is detected, a calibration of the irradiation device can be performed.

As described before, the energy beam can be generated and guided to the at least one position, for example in or on the calibration body. Via the energy beam, e.g. a spot of the energy beam, energy is deposited in the material of the calibration body that causes a status change of the material of the calibration body allowing for generating at least one calibration structure. The calibration of the irradiation device can be performed based on the calibration structure, in particular the calibration parameter relating to the calibration structure, e.g. whether the calibration structure is properly generated. For example, correctional values can be generated to compensate occurring deviations and/or the behavior of the apparatuses over time can be observed.

Thus, the energy beam can be guided through at least one part of the volume of the calibration body and the focal point or a spot, respectively, of the energy beam can be moved to a position in the volume of the calibration body to deposit a defined amount of energy for achieving the status change and thereby generate the at least one calibration structure in the at least one position. Hence, the energy beam can be guided or the calibration body can be moved in that the spot of the energy beam coincides with the at least one position in which the calibration structure has to be generated. By depositing the required energy to cause the material of the calibration body to change, the calibration structure can be generated in the focal position or the focal point of the energy beam inside the volume of the calibration body. Therefore, it is possible to verify whether the position of the spot of the energy beam is properly calibrated, wherein the calibration body according to the invention allows for a three-dimensional determination of the positioning accuracy, as the focal position is generated in the three-dimensional body of the volume of the calibration body according to this embodiment.

As described before, it is possible to cause the status change of the material of the calibration body by depositing energy via the energy beam in order to generate the calibration structure. The calibration structure can be generated by a variety of mechanisms, wherein the status change can, inter alia, be at least one of: a structural change, in particular a crack and/or a pore and/or a hole; a change of at least one optical property of the material of the calibration body, in particular the color and/or the transparency; and/or a change of at least one marker element provided in the calibration body.

Hence, the material of the calibration body may be changed by depositing the energy via the energy beam for causing a structural change of the material of the calibration body, in particular a crack and/or a pore and/or a hole. Thus, energy can be deposited via the energy beam to cause the material of the calibration body to change its structure in the at least one position to which the energy beam is guided. In the at least one position a crack and/or a pore and/or a hole can be generated which can be detected by a suitable detection device, e.g. a camera. It is also possible that the calibration structure can be generated by changing at least one optical property of the material of the calibration body, in particular the color and/or the transparency. Hence, by guiding the energy beam into the volume of the calibration body energy can be deposited in defined positions in the volume of the calibration body, wherein the status of the material of the calibration body may change. In particular, the status change may be optically detectable in that at least one optical property of the material changes. The status change of the optical property of the material may, inter alia, be a change in the color and/or a change in the transparency in that position. For example, an initially transparent material may become opaque due to the energy to position. In general the degree of transparency may be changed. It is also possible that transparent material is changed into a colored region or that the color of the calibration body in that position changes.

It is also possible that the calibration body provides marker elements in the volume of the calibration body. Those marker elements can be changed by depositing energy via the energy beam. For example, such marker elements may structurally change or change in at least one optical property or can be removed from the calibration body by energy deposition, e.g. dissolved or evaporated.

As described before, a plurality of calibration structures can be generated that can be arbitrarily distributed across the volume of the calibration body. Particularly, it is possible to generate at least two calibration structures in the same layer and/or at least two calibration structures in at least two different layers. The term "layer" of the calibration body may refer to the same area or the same plane of the calibration body with a defined distance from the build plane. In other words, the term "layer" may refer to the layerwise additive manufacturing process that can be performed on an adequate additive manufacturing apparatus involving an irradiation device. Thus, the layers of the calibration body which does not have to be layerwise manufactured represent an area or a plane in which every position has to same z-position. In other words, the z-direction may define the build direction of the apparatus. A layer therefore, can be deemed as plane or region essentially parallel to a build plane or process plane, e.g. the plane on which the calibration body is arranged.

According to this embodiment, it is possible to generate at least two calibration structures in the same layer, e.g. with the same z-position, wherein the energy beam is guided in an x- and y-plane to generate the calibration structures. Additionally or alternatively it is possible to generate at least two calibration structures in at least two different layers, e.g. with different z-positions. Thus, an arbitrary pattern of calibration structures can be generated in the volume of the calibration body, e.g. different calibration structures in different layers of the calibration body. Therefore, it is possible to analyze whether the positioning accuracy and other parameters of the irradiation device remains stable in the x- and y-plane and whether deviations occur in different z-positions. Thus, the behavior of the energy beam during an additive manufacturing process can be simulated, as different structures or different patterns can be irradiated in the calibration body in a layerwise manner, in particular subsequently in different x-, y- and z-positions.

Further, it is possible to generate at least two calibration structures in two different layers in the same calibration body element and/or generate at least two calibration structures in at least two separate calibration body elements arranged in defined spatial relation, in particular stacked in build direction. The term "build direction" may refer to the direction in which the layerwise manufacturing process is usually performed on an apparatus for additively manufacturing three-dimensional objects. According to this embodiment, the calibration body may be built of at least one solid body or it is possible that the calibration body may comprise at least two different calibration body elements, e.g. individual glass plates, that can be attached to one another in order to achieve a defined spatial relation.

By providing one solid calibration body it is possible that different calibration structures can be generated in different layers of the calibration body, e.g. a calibration body that only comprises one single calibration body element. It is also possible that in each calibration body element multiple calibration structures are generated in the same and/or in different layers. Also, it is possible that a calibration body comprises multiple calibration body elements, wherein calibration structures are generated in one single layer per calibration body element. Of course, a combination of different calibration body elements, wherein different calibration structures are generated in at least two layers of one calibration body element is also possible.

By providing different calibration body elements it is possible to avoid optical effects caused by guiding the energy beam through the volume of the calibration body, e.g. effects due to a different refractive index of the material of the calibration body compared with the surrounding atmosphere. Hence, it is either possible to compensate the effects of the material of the calibration body or to use different calibration body elements in which the effect of the material of the calibration body is always the same, e.g. calibration body elements with defined dimensions. Hence, calibration body elements with the same dimensions provide the benefit that the energy beam can always follow the same optical path in the individual calibration body elements.

As described before, the at least two calibration body elements may be arranged in a defined spatial relation, for example stacked in build direction. The arrangement of the at least two calibration body elements can be performed by attaching, in particular gluing at least two calibration body elements together and/or arranging the at least two calibration body elements in a holding structure, in particular a rack or a base element with holding elements, in particular pins or protrusions. Inter alia, it is possible to generate a positive locking connection and/or a force locking connection by gluing and/or arranging the at least two calibration body elements in a holding structure. The attachment of the at least two calibration body elements ensures that the defined spatial relation is maintained and that the position of the individual calibration body elements is fixed. Therefore, influences on the calibration process can be avoided, as the individual calibration body elements cannot move relative to one another.

The method may further be improved by determining the calibration parameter of at least one calibration structure, in particular at least two calibration structures, from at least two determination directions, in particular from different observation angles and/or different axes. Hence, a visual inspection can be performed, e.g. via camera, in which the calibration parameter of at least one calibration structure can be determined by inspecting the calibration structure from at least two determination directions. Thus, an improved determination can be performed by determining the position and/or the size or any other calibration parameter of the calibration structures from two determination directions, e.g. two essentially perpendicular directions. For example, it is possible that the position of the at least one calibration structure is determined along different axes and/or from different observation angles, e.g. along the x- axis or the y- axis and the z-axis.

As the calibration body is at least partially permeable for electromagnetic radiation, it is also possible to detect the calibration structures from different positions in the volume of the calibration body. Deviations from nominal positions and/or deviations from a nominal size can be determined for each of the calibration structures. Further, relative positions of at least two calibration structures can be determined by capturing images from a different determination directions, e.g. along the x- axis and/or along the y- or z - axis.

Further, at least two calibration structures can be generated with at least two different energy beams guided via different beam guiding units. In particular, in apparatuses with multiple energy beams, different beam guiding units are used to guide the different energy beams along beam paths or "writing paths". By generating different calibration structures with different energy beams, it is possible to simultaneously determine the positioning accuracy for each beam guiding unit and further determine whether the positioning accuracy of the beam guiding units relative to one another meets defined requirements. For example, different calibration structures can be generated with the at least two energy beams, wherein calibration parameters of the calibration structures can be determined, e.g. a relative position of the at least two calibration structures or groups of calibration structure, e.g. calibration patterns comprising multiple calibration structures. Thus, it is possible to calibrate the irradiation device comprising more than one beam guiding unit using only one calibration body.

For example, at least one calibration structure can be generated with a defined offset relative to at least one other calibration structure, wherein the at least two calibration structures are generated via different energy beams, in particular alternatingly layerwise generating the first or the second calibration structure with a defined offset. As described before, the irradiation device may comprise at least two beam sources and/or two beam guiding units that are adapted to individually guide two different energy beams. By generating one of the at least two calibration structures in a first defined position and the second calibration structure with a defined offset to the first position, it is possible to derive whether both calibration structures are generated in their nominal positions.

Inter alia, it is possible to layerwise alternate the positions or the offsets in which the calibration structures are generated. For example, in the first layer of the first calibration structure that is generated via the first energy beam can be generated in the defined position and the second calibration structure in the first layer can be generated with the defined offset. In the second layer, the first calibration structure or the first calibration structures can be generated with the defined offset and the second calibration structure or the second calibration structures can be generated in the defined position or the defined positions. By alternatingly layerwise generating the first or the second calibration structures with the defined offset, influences on the positions of the calibration structures can be eliminated. Further, drifts of the energy beams or other phenomena occurring during the additive manufacturing process can be derived for both beam guiding units individually.

According to another embodiment of the method, the same or different calibration structures may be generated via the different energy beams. Inter alia, different patterns, symbols or the like can be generated with the different energy beams. For example, a first pattern or a first symbol can be generated via the first energy beam and a second pattern or a second symbol may be generated via the second energy beam. It is also possible that the calibration structures generated with the different energy beams cause different structural changes or different status changes of the material of the calibration body. Further, it is also possible to generate complex patterns, such as circles or three-dimensional patterns in the volume of the calibration body, wherein the generated pattern can be compared with a nominal pattern and deviations between the nominal pattern and the generated pattern can be determined. A first quick determination can involve a visual inspection, e.g. performed by an operator, wherein a second inspection can be performed using an optical determination device, e.g. a scanner or a camera or the like.

The method can further be improved by providing at least one calibration body element, in particular a base element, with at least one prefabricated calibration structure, in particular a set of prefabricated calibration structures, and generating at least one calibration structure with an energy beam and determining at least one calibration parameter of the at least one generated calibration structure relative to the at least one prefabricated calibration structure, in particular the relative position between the at least one generated calibration structure relative to the at least one prefabricated calibration structure.

According to this embodiment, the at least one calibration body element can be provided with at least one prefabricated calibration structure, e.g. a base element may be provided that comprises at least one prefabricated calibration structure in the volume of the base element. The prefabricated calibration structure can therefore be aligned with calibration structures that are generated or that have to be generated via at least one energy beam of the irradiation device. By arranging the at least one calibration body element with the at least one prefabricated calibration structure in a defined position in the beam guiding region, it is also possible to perform an absolute calibration of the irradiation device, as a relation between the coordinate system of the beam guiding region and the position and therefore, the coordinate system of the calibration body can be established and verified.

The calibration body element may be one solid element or a prefabricated base element with prefabricated calibration structures. The prefabricated calibration structures may inter alia, be the same structural changes or status changes in the material of the calibration body element as those generated via the energy beam. It is also possible that other calibration structures are prefabricated in the material of the calibration body, e.g. a metal marker elements or the like. The method may be performed with a glass calibration body or a calibration body made from a synthetic material, in particular a material that is at least partially transparent for a laser beam with a defined wavelength, particularly a wavelength of 1060 nm.

Besides, the invention relates to using a calibration body for calibrating at least one irradiation device of an apparatus for additively manufacturing three-dimensional objects by means of successive layerwise selective irradiation and consolidation of layers of a build material which can be consolidated by means of an energy beam guided by the irradiation device, wherein the calibration body is at least partially permeable for the energy beam and at least one calibration structure can be generated on or in the calibration body via the energy beam. Further, the invention relates to a determination device for calibrating at least one irradiation device of an apparatus for additively manufacturing three-dimensional objects by means of successive layerwise selective irradiation and consolidation of layers of a build material which can be consolidated by means of an energy beam guided by the irradiation device, wherein the determination device is adapted to perform the inventive method, as described before.

Additionally, the invention relates to a calibration body for calibrating an apparatus for additively manufacturing three-dimensional objects by means of successive layerwise selective irradiation and consolidation of layers of a build material which can be consolidated by means of an energy beam guided by the irradiation device, wherein the calibration body is at least partially permeable for the energy beam and at least one calibration structure can be generated on or in the calibration body via the energy beam. Self-evidently, all details, features and advantages described with respect to the inventive method are fully transferable to the inventive use of a calibration body, the inventive calibration body and the inventive determination device.

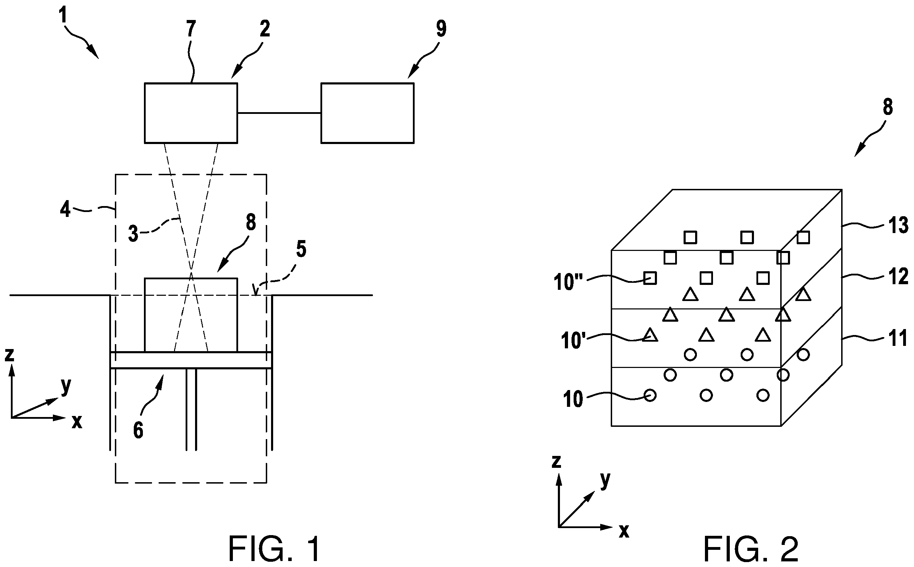

FIG. 1 shows an apparatus 1 for additively manufacturing three-dimensional objects which apparatus 1 comprises an irradiation device 2 via which an energy beam 3, e.g. a laser beam, can be guided in a beam guiding region 4, e.g. arranged in a process chamber of the apparatus 1.

The beam guiding region 4 that is depicted via the dashed contour is only exemplary, wherein it is also possible that any other beam guiding region 4 can be used to guide the energy beam 3 across a build plane 5, for instance. For example, it is also possible that the z-position is adjusted via a carrying element 6 or that the z-position is adjusted via a beam guiding unit 7 that is also adapted to guide the energy beam 3 in an x- and y-plane, e.g. comprising the build plane 5.

In the apparatus 1 that is depicted in FIG. 1, a calibration body 8 is arranged in the beam guiding region 4, wherein the calibration body 8 is at least partially permeable for the energy beam 3, as indicated via the dotted contour. In other words, the energy beam 3 can be guided through the calibration body 8, wherein due to the energy deposition via the energy beam 3 calibration structures can be generated on the outer surface of the calibration body 8 and/or in the volume of the calibration body 8. Thus, the beam guiding unit 7 can be used to guide the energy beam 3 to any arbitrary position inside the calibration body 8, wherein a focal point of the energy beam 3 can be guided to at least one position in which the calibration structure is generated by energy deposition.

The calibration structure can comprise or be at least one detectable status change of the calibration material, i.e. the material of the calibration body 8. In this exemplary embodiment the calibration body 8 is made of glass, wherein it is also possible that a synthetic material can be used to form the calibration body 8. The term "at least partially permeable for the energy beam 3" refers to that the energy beam 3 can be guided through the calibration body 8 to the at least one position in which energy has to be deposited to generate the calibration structure.

After the at least one calibration structure is generated in the calibration body 8 a determination device 9 is used to determine at least one calibration parameter of the at least one calibration structure. The determination device 9 can be a component of the apparatus 1 or the irradiation device 2, but it is also possible to remove the calibration body 8 from the apparatus 1 for performing determination. For example, after the at least one calibration structure, in particular every calibration structure, has been generated in the calibration body 8, the calibration body 8 can be provided to an external determination device 9 (not depicted), wherein the calibration body 8 can be measured via the external determination device 9 as well.

Subsequently, it is possible to determine at least one calibration parameter of the at least one calibration structure that is generated in the calibration body 8, wherein a calibration status of the irradiation device 2 can be determined dependent on the at least one calibration parameter, e.g. dependent on whether the calibration structure is generated in the correct position, with the correct size and the like. Thus, it is possible to calibrate the irradiation device 2, e.g. by generating correctional values, based on the calibration status. FIG. 2 shows a calibration body 8 in which exemplarily nine calibration structures 10, 10' and 10" are generated in three different layers 11, 12 and 13. In other words, in a first layer 11 nine calibration structures 10, in a second layer 12 nine calibration structures 10' and in a third layer 13 nine calibration structures 10" are generated. The calibration structures 10, 10', 10" generated in the same layer 11, 12, 13 are all generated in the same z-distance from the bottom of the calibration body 8 or in the same x- and y-plane, respectively.

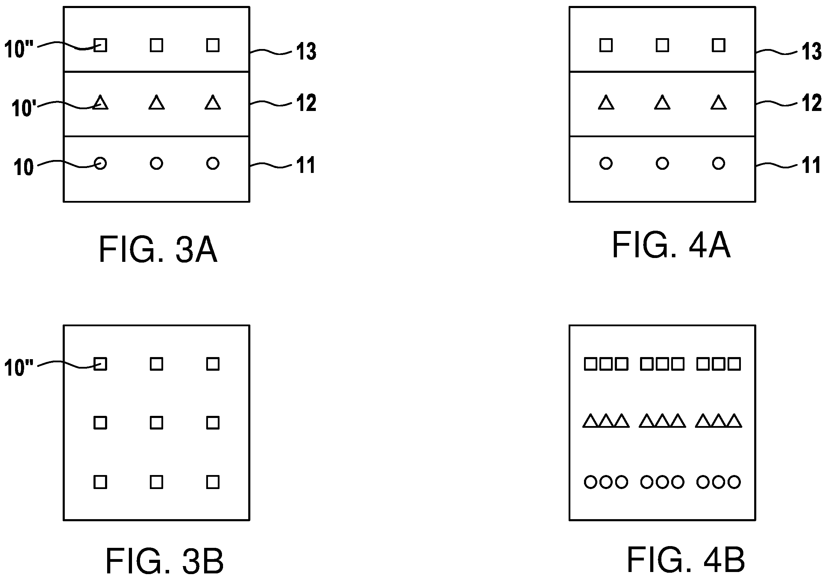

For generating the individual calibration structures 10, 10', 10", the energy beam 3 is guided to the individual positions in which the calibration structures 10, 10', 10" have to be generated. In particular, the spot of the energy beam 3, i.e. the focal position of the energy beam 3 is guided to the individual positions. As the calibration body 8 is at least partially permeable to electromagnetic radiation, in particular to a laser beam, it is possible to analyze the pattern, in particular the distribution and the positions of the individual calibration structures 10, 10', 10" from multiple directions. Exemplary embodiments of the calibration process performed with the calibration body 8 are depicted in -FIGs. 3A and 3B, FIGs. 4A and 4B, FIGs. 5A and 5B, FIGs. 6A-6C, FIGs. 7A-7C, and FIG. 8.

In FIGs. 3A and 3B, a first possible embodiment of the calibration process is depicted. FIG. 3A shows a calibration body 8 according to a first exemplary embodiment. In this exemplary embodiment all calibration structures 10, 10', 10" are generated in the correct positions. Thus, in the side view that is depicted in FIG. 3A, e.g. along the x- or y-direction, the individual calibration structures 10, 10', 10" in the same layers are aligned in that per line only one of those is visible. Accordingly, FIG. 3B represents a view from the top, e.g. along the negative z-direction. Again, only the uppermost calibration structures 10" are visible, as the other calibration structures 10, 10' are covered by the calibration structures 10" in all nine positions.

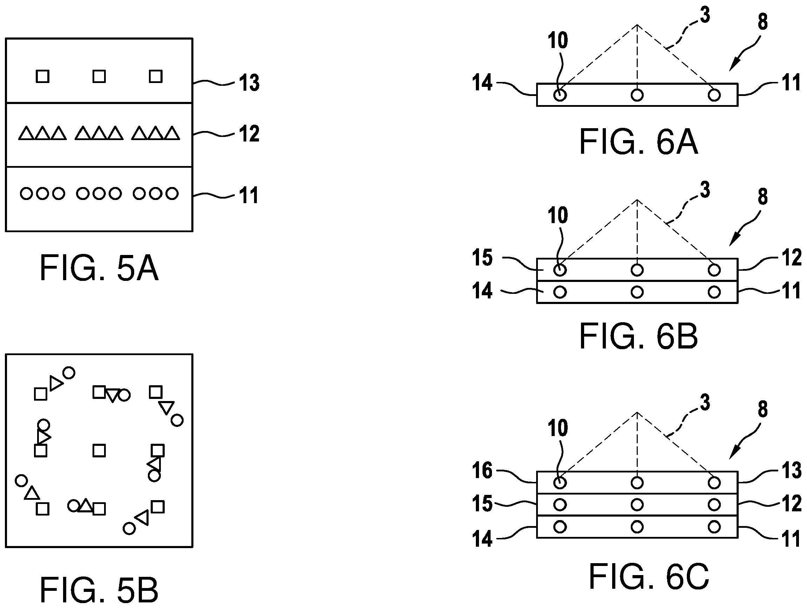

Regarding the embodiments depicted in FIGs. 4A and 4B, and FIGs. 5A and 5B, typical calibration errors are depicted. Of course, the embodiments depicted are only exemplary and any arbitrary deviation can be determined via the method for calibration presented herein. In FIGs. 4A and 4B, a thermal shift is exemplarily depicted, wherein the positions of the calibration structures 10, 10', 10" are shifted, e.g. in x-direction with respect to the calibration structures 10, 10' in the previous layer 11, 12. Thus, in the side view, e.g. along the x-direction or y-direction that is depicted in FIG. 4A, the positions of the calibration structures 10, 10', 10" are shifted. Also, and in comparison to FIG. 3B, FIG. 4B shows that all calibration structures 10, 10', 10" are visible from the top indicating that the calibration patterns formed in each layer 11, 12, 13 are not properly aligned and that a shift, e.g. a thermal shift of an optical element, occurred during the irradiation process.

Accordingly, FIGs. 5A and 5B represent a rotational error, wherein the carrying element 6 or the calibration body 8 is rotated during the generation of the calibration structures 10, 10" in the individual layers 11, 12, 13. The side view shows that the uppermost layer 13 does not show any rotational error. In the layers 11, 12 the calibration structures 10, 10' are visible due to the rotation around the z-axis. Thus, all nine calibration structures 10, 10' are visible in the layers 11, 12 as the rotational error prevents the calibration structures 10, 10' from being covered by one another. Also, in FIG. 5B the rotational error can be derived from the shifts of the positions of the calibration structures 10, 10' relative to their nominal positions.

FIGs. 6A-6C shows an exemplary process steps of the calibration method as described before. In FIGs. 6A-6C a first calibration body element 14 of the calibration body 8 is arranged in the beam guiding region 4, e.g. a glass plate. Thus, calibrations structures 10 are generated in the layer 11 that is formed by the calibration body element 14. Subsequently, a second calibration body element 15, e.g. another class plate, is arranged on top of the calibration body element 14, e.g. attached to the calibration body element 14, and further calibration structures 10 are generated via the energy beam 3. Inter alia, it is possible to attach the second calibration body element 15 on the first calibration body element 14 via gluing or a positive locking connection or a force locking connection or the like. Inter alia, a frame or other holding structure can be provided that holds the calibration body elements 14, 15 in a defined spatial relation. FIG. 6C depicts another process step in which a third calibration body element 16 is attached on top of the second calibration body element 15 and further calibration structures 10 are generated via the energy beam 3. Thus, in each calibration body element 14 - 16 the same optical path has to be followed via the energy beam 3, wherein influences of the refractive index of the material of the calibration body 8 are the same for each layer 11, 12, 13 and therefore for every irradiation process step.

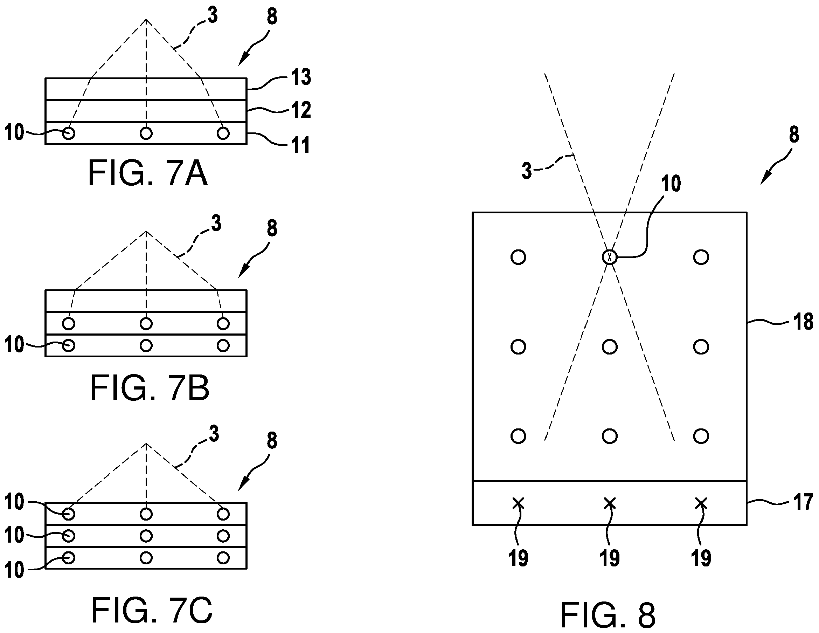

In FIGs. 7A and 7B, an alternative embodiment is depicted, wherein one single calibration body 8 is provided in which calibration structures 10 have to be generated in the different layers 11, 12, 13 subsequently. Thus, the effect on the refractive index due to the refraction of the energy beam 3 at the surface of the calibration body 8 has to be taken into calculation for the different layers 11, 12, 13 to ensure that all calibration structures 10 are generated in the correct nominal positions. Of course, an arbitrary combination of the embodiments depicted in FIGs. 6A-6C, and FIGs. 7A-8C, is possible.

FIG. 8 shows a further exemplary embodiment of a calibration body 8, wherein the calibration body 8 comprises two calibration body elements 17, 18, wherein in in the calibration body elements 17 prefabricated calibration structures 19 are provided. In other words, the calibration body element 17 can be understood as "base element" onto which the calibration body element 18 can be attached. Of course, as indicated via FIGs. 6A-6C, and FIGs. 7A-7C, it is also possible that the calibration body 8 that is depicted in FIG. 8 is one single calibration body element in that the calibration body elements 17, 18 are integrally formed or one single calibration body 8 provides prefabricated calibration structures 19, e.g. metal symbols or metal patterns integrated into a glass or synthetic body.

Subsequently, the energy beam 3 is used to generate calibration structures 10 in the calibration body element 18. Afterwards, it is possible to analyze whether the calibration structures 10 are aligned with the calibration structures 19 that are prefabricated in the calibration body element 17. Additionally, it is possible to arrange each of the calibration bodies 8, in particular the calibration body 8 in FIG. 8, namely the calibration body element 17, in a defined position in the beam guiding region 4, e.g. a defined position of the build plane 5. Thus, an absolute calibration can be performed with respect to the interior of the process chamber, in particular the build plane 5.

As described before, the calibration bodies 8 depicted in -FIGs. 1-8 can be used to calibrate an irradiation device 2 of an apparatus 1 for additively manufacturing three-dimensional objects. All details, features and advantages that are described with respect to the individual Figures are fully transferable, combinable and exchangeable.

Further aspects of the invention are provided by the subject matter of the following clauses:
1. A method for calibration of at least one irradiation device (2) of an apparatus (1) for additively manufacturing three-dimensional objects by means of successive layerwise selective irradiation and consolidation of layers (11, 12, 13) of a build material which can be consolidated by means of an energy beam (3) guided by the irradiation device (2), comprising: arranging at least one calibration body (8) in a beam guiding region (4) in which the energy beam (3) can be guided via the irradiation device (2), wherein the calibration body (8) is at least partially permeable for the energy beam (3); guiding the energy beam (3), in particular a spot of the energy beam (3), to at least one position on the calibration body (8) and/or in the volume of the calibration body (8); generating at least one calibration structure (10, 10', 10"), in particular a detectable status change of the calibration material, in the at least one position; determining at least one calibration parameter of the at least one calibration structure (10, 10', 10"); determining a calibration status of the irradiation device (2) dependent on the at least one calibration parameter; and calibrating the irradiation device (2) based on the calibration status.
2. The method of any preceding clause, comprising: guiding the energy beam (3) through at least one part of the volume of the calibration body (8) and generating a focal point of the energy beam (3) in the volume of the calibration body (8) to generate the at least one calibration structure (10, 10', 10") in the at least one position.
3. The method of any preceding clause, comprising: generating the calibration structure (10, 10', 10") by causing a status change in the material of the calibration body (8), wherein the status change is at least one of: a structural change, in particular a crack and/or a pore and/or a hole; a change of at least one optical property of the material of the calibration body (8), in particular the color and/or the transparency; and/or a change of at least one marker element provided in the calibration body (8).
4. The method of any preceding clause, comprising: generating at least two calibration structures (10, 10', 10") in the same layer (11, 12, 13) and/or at least two calibration structures (10, 10', 10") in at least two different layers (11, 12, 13).
5. The method of any preceding clause, comprising: generating at least two calibration structures (10, 10', 10") in two different layers (11, 12, 13) in the same calibration body element (14, 15, 16, 18) and/or generating at least two calibration structures (10, 10', 10") in at least two separate calibration body elements (14, 15, 16, 18) arranged in a defined spatial relation, in particular stacked in build direction.
6. The method of any preceding clause, comprising: arranging at least two calibration body elements (14, 15, 16, 18) in a defined spatial relation, in particular stacked in build direction, by attaching, in particular gluing at least two calibration body elements (14, 15, 16, 18) together and/or arranging the at least two calibration body elements (14, 15, 16, 18) in a holding structure, in particular a rack or a base element with holding elements, in particular pins or protrusions.
7. The method of any preceding clause, comprising: determining the calibration parameter of at least one calibration structure (10, 10', 10"), in particular at least two calibration structures (10, 10', 10"), from at least two determination directions, in particular from different observation angles and/or along different axes.
8. The method of any preceding clause, comprising: generating at least two calibration structures (10, 10', 10") with at least two different energy beams (3) guided via different beam guiding units (7).
9. The method of any preceding clause, comprising: generating at least one calibration structure (10, 10', 10") with a defined offset relative to at least one other calibration structure (10, 10', 10"), wherein the at least two calibration structures (10, 10', 10") are generated via different energy beams (3), in particular alternatingly layerwise generating the first or the second calibration structure (10, 10', 10") with a defined offset.
10. The method of any preceding clause, comprising: generating the same or different calibration structures (10, 10', 10") via the different energy beams (3).
11. The method of any preceding clause, comprising: providing at least one calibration body element (17), in particular a base element, with at least one prefabricated calibration structure (19), in particular a set of prefabricated calibration structures (19), and generating at least one calibration structure (10, 10', 10") with an energy beam (3) and determining at least one calibration parameter of the at least one generated calibration structure (10, 10', 10") relative to the at least one prefabricated calibration structure (19), in particular the relative position between the at least one generated calibration structure (10, 10', 10") relative to the at least one prefabricated calibration structure (19).
12. The method of any preceding clause, comprising: performing the method with a glass calibration body (8) and/or a calibration body (8) made from a synthetic material, in particular at least partially transparent for a laser beam with a wavelength of 1060nm.
13. Use of a calibration body (8) for calibrating at least one irradiation device (2) of an apparatus (1) for additively manufacturing three-dimensional objects by means of successive layerwise selective irradiation and consolidation of layers (11, 12, 13) of a build material which can be consolidated by means of an energy beam (3) guided by the irradiation device (2), wherein the calibration body (8) is at least partially permeable for the energy beam (3) and at least one calibration structure (10, 10', 10") can be generated on or in the calibration body (8) via the energy beam (3).
14. Use of the calibration body (8) of any preceding clause in connection with a method of any preceding clause.
15. A determination device (9) for calibrating at least one irradiation device (2) of an apparatus (1) for additively manufacturing three-dimensional objects by means of successive layerwise selective irradiation and consolidation of layers (11, 12, 13) of a build material which can be consolidated by means of an energy beam (3) guided by the irradiation device (2), wherein the determination device is adapted to: determine at least one calibration parameter of at least one calibration structure (10, 10', 10"); determine a calibration status of the irradiation device (2) dependent on the at least one calibration parameter; and calibrate the irradiation device (2) based on the calibration status; wherein the at least one calibration body (8) has been arranged in a beam guiding region (4) in which the energy beam (3) can be guided via the irradiation device (2), wherein the calibration body (8) is at least partially permeable for the energy beam (3); wherein the energy beam (3) has been used to generate the at least one calibration structure (10, 10', 10"), in particular a detectable status change of the calibration material, in the at least one position, the energy beam (3), in particular a spot of the energy beam (3), having been guided to at least one position on the calibration body (8) and/or in the volume of the calibration body (8).
16. The determination device (9) of any preceding clause, wherein the determination device (9) is configured for use in performing the method of any preceding clause.
17. A calibration body (8) for calibrating an apparatus (1) for additively manufacturing three-dimensional objects by means of successive layerwise selective irradiation and consolidation of layers (11, 12, 13) of a build material which can be consolidated by means of an energy beam (3) guided by the irradiation device (2), wherein the calibration body (8) is at least partially permeable for the energy beam (3) and at least one calibration structure (10, 10', 10") can be generated on or in the calibration body (8) via the energy beam (3).
18. A computer-readable medium comprising computer-readable instructions, which when executed by a processor associated with a determination device (9) for calibrating at least one irradiation device (2) of an apparatus (1) for additively manufacturing three-dimensional objects, cause the determination device to: determine at least one calibration parameter of at least one calibration structure (10, 10', 10"); determine a calibration status of the irradiation device (2) dependent on the at least one calibration parameter; and calibrate the irradiation device (2) based on the calibration status; wherein the at least one calibration body (8) has been arranged in a beam guiding region (4) in which the energy beam (3) can be guided via the irradiation device (2), wherein the calibration body (8) is at least partially permeable for the energy beam (3); wherein the energy beam (3) has been used to generate the at least one calibration structure (10, 10', 10"), in particular a detectable status change of the calibration material, in the at least one position, the energy beam (3), in particular a spot of the energy beam (3), having been guided to at least one position on the calibration body (8) and/or in the volume of the calibration body (8).
19. The computer-readable medium of any preceding clause, wherein the computer-readable medium is configured for use in performing the method of any preceding clause.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of calibrating an irradiation device of an apparatus for additively manufacturing three-dimensional objects by means of successive layerwise selective irradiation and consolidation of layers of a build material which can be consolidated by means of an energy beam guided by the irradiation device, comprising:
arranging at least one calibration body in a beam guiding region in which the energy beam can be guided via the irradiation device, wherein the calibration body is at least partially permeable for the energy beam;
guiding the energy beam to at least one position on the calibration body and/or in the volume of the calibration body;
generating at least one calibration structure in the at least one position;
determining at least one calibration parameter of the at least one calibration structure;
determining a calibration status of the irradiation device dependent on the at least one calibration parameter; and
calibrating the irradiation device based on the calibration status.

2. The method of claim 1, comprising:
guiding the energy beam through at least one part of the volume of the calibration body and generating a focal point of the energy beam in the volume of the calibration body to generate the at least one calibration structure in the at least one position.

3. The method of claim 1 or 2, comprising:
generating the calibration structure by causing a status change in the material of the calibration body, wherein the status change is at least one of:
a structural change;
a change of at least one optical property of the material of the calibration body; and/or
a change of at least one marker element provided in the calibration body.

4. The method of any preceding claim, comprising:
generating at least two calibration structures in the same layer and/or at least two calibration structures in at least two different layers.

5. The method of any preceding claim, comprising:
generating at least two calibration structures in two different layers in the same calibration body element and/or generating at least two calibration structures in at least two separate calibration body elements arranged in a defined spatial relation.

6. The method of claim 5, comprising:
arranging at least two calibration body elements in a defined spatial relation by attaching at least two calibration body elements together and/or arranging the at least two calibration body elements in a holding structure.

7. The method of any preceding claim, comprising:
determining the calibration parameter of at least one calibration structure from at least two determination directions.

8. The method of any preceding claim, comprising:
generating at least two calibration structures with at least two different energy beams guided via different beam guiding units.

9. The method of claim 8, comprising:
generating at least one calibration structure with a defined offset relative to at least one other calibration structure, wherein the at least two calibration structures are generated via different energy beams.

10. The method of claim 8, comprising:
generating the same or different calibration structures via the different energy beams.

11. The method of any preceding claim, comprising:
providing at least one calibration body element with at least one prefabricated calibration structure, and generating at least one calibration structure with an energy beam and determining at least one calibration parameter of the at least one generated calibration structure relative to the at least one prefabricated calibration structure.

12. The method of any preceding claim, comprising:
performing the method with a glass calibration body and/or a calibration body made from a synthetic material.

13. A determination device for calibrating an irradiation device of an apparatus for additively manufacturing three-dimensional objects by means of successive layerwise selective irradiation and consolidation of layers of a build material which can be consolidated by means of an energy beam guided by the irradiation device, wherein the determination device is adapted to:
determine at least one calibration parameter of at least one calibration structure;
determine a calibration status of the irradiation device dependent on the at least one calibration parameter; and
calibrate the irradiation device based on the calibration status;
wherein the at least one calibration body has been arranged in a beam guiding region in which the energy beam can be guided via the irradiation device, wherein the calibration body is at least partially permeable for the energy beam;
wherein the energy beam has been used to generate the at least one calibration structure in the at least one position, the energy beam having been guided to at least one position on the calibration body and/or in the volume of the calibration body.

14. A computer-readable medium comprising computer-readable instructions, which when executed by a processor associated with a determination device for calibrating an irradiation device of an apparatus for additively manufacturing three-dimensional objects, cause the determination device to:
determine at least one calibration parameter of at least one calibration structure;
determine a calibration status of the irradiation device dependent on the at least one calibration parameter; and
calibrate the irradiation device based on the calibration status;
wherein the at least one calibration body has been arranged in a beam guiding region in which the energy beam can be guided via the irradiation device, wherein the calibration body is at least partially permeable for the energy beam;
wherein the energy beam has been used to generate the at least one calibration structure in the at least one position, the energy beam having been guided to at least one position on the calibration body and/or in the volume of the calibration body.
